# EUROPÄISCHE PATENTSCHRIFT

(11) **EP 2 403 893 B1**
(45) Veröffentlichungstag und Bekanntmachung des Hinweises auf die Patenterteilung: **19.12.2018**
(21) Anmeldenummer: 10706981.7
(22) Anmeldetag: 23.02.2010
(51) Int. Cl.: C08G 59/22, C08G 59/24, C08G 59/42, C08G 59/68, C08L 63/02, H01B 3/40

(54) **GIESSHARZSYSTEM FÜR ISOLIERSTOFFE**
CASTING RESIN SYSTEM FOR INSULATING MATERIAL
SYSTÈME DE RESINE DE MOULAGE POUR MATERIAU D'ISOLATION

(30) Priorität: 06.03.2009 DE 102009012195
(43) Veröffentlichungstag der Anmeldung: 11.01.2012
(73) Patentinhaber: Siemens Aktiengesellschaft, 80333 München (DE)
(72) Erfinder: SWIATKOWSKI, Gernot, 13629 Berlin (DE)
(86) Internationale Anmeldenummer: PCT/EP2010/052269
(87) Internationale Veröffentlichungsnummer: WO 2010/100058

(56) Entgegenhaltungen:
- EP-A1- 0 671 427
- EP-A2- 0 673 957
- US-A- 5 405 931
- US-A- 6 030 713

## Beschreibung

Die vorliegende Erfindung bezieht sich auf das Gebiet von Gießharzsystemen für Schaltanlagen.

Bei elektrischen Schaltanlagen spielt - insbesondere bei kompakter Bauweise - der Isolierstoff eine wichtige Rolle.

Dabei werden unter anderem sog. Festharze eingesetzt. Diese werden meist durch einen sog. Advancementprozess hergestellt, wobei Flüssigharze mit einer geeigneten Ausgangskomponente, meist Bisphenol A u. einem Katalysator umgesetzt werden. Durch diesen Prozeß der exotherm abläuft, entwickeln Systeme auf Basis von Festharzen eine günstige Exothermie während der Härtung. Weiterhin sind die Systeme bedingt durch die Kettenverlängerung flexibler als Flüssigharzsysteme.

In der EP 671 427 werden verschiedene härtbare Epoxidharzsysteme auf der Basis von Epoxidharzen und Polycarbonsäureanhydriden offenbart.

Bei diesen Harzen ist eine hohe Glasübergangstemperatur von Vorteil, gleichzeitig bestehen aber auch häufig hohe Anforderungen an günstigen mechanischen Eigenschaften wie geringe Rissanfälligkeit und hohe Berstwerte.

In der US 6 030 713 A werden flüssige Bisphenol A- oder F-Komponenten offenbart. Die EP 0 673 957 A2 offenbart ebenfalls flüssige Bisphenol A- und F-Komponenten. Gleiches gilt für die US 5 405 931 A.

Es stellt sich somit die Aufgabe, alternativ zu den bestehenden Lösungen ein Festharzsystem für Schaltanlagen zu schaffen, bei dem eine erhöhte Glasübergangstemperatur bei gleichzeitig guten oder sogar verbesserten sonstigen Eigenschaften aufgefunden wird.

Diese Aufgabe wird durch ein Festharzsystem gemäß Anspruch 1 der vorliegenden Anmeldung gelöst. Demgemäß wird ein Festharzsystem für Isolierstoffe in Schaltanlagen vorgeschlagen, aufgebaut auf den Ausgangsstoffen umfassend ein Festharz auf Basis von Bisphenol A und ein Flüssigharz auf Basis von Bisphenol F.

Überraschend hat sich herausgestellt daß beim Einsatz von Flüssigepoxidharzen auf Basis von Bisphenol F einige mechanische und/oder elektrische Eigenschaften des Harzsystems stark verbessert werden konnten. Darunter zählen je nach Anwendung u.a.
- bessere Berstwerte
- besseres Temperaturwechselverhalten
- erhöhte Glasübergangstemperatur.

Im Sinne der vorliegenden Erfindung beinhaltet und/oder umfasst der Term "auf der Basis von X" insbesondere daß als eine Ausgangskomponente - insbesondere Hauptkomponente - die Verbindung X verwendet wird. Dabei können alle im Stand der Technik bekannten sonstigen Stoffe als Zusatzstoffe Verwendung finden.

Im Sinne der vorliegenden Erfindung wird unter "Bisphenol F" die chemische Verbindung 4,4'-Dihydroxydiphenylmethan verstanden, die folgende Struktur hat:

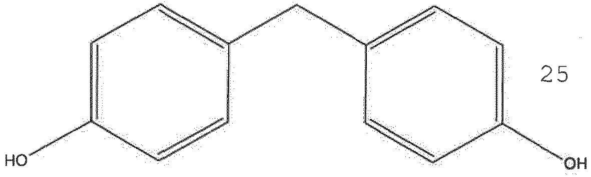

Im Sinne der vorliegenden Erfindung wird unter "Bisphenol A" die chemische Verbindung 2,2'-Bis-(4-hydroxyphenyl)-propan verstanden, die folgende Struktur hat:

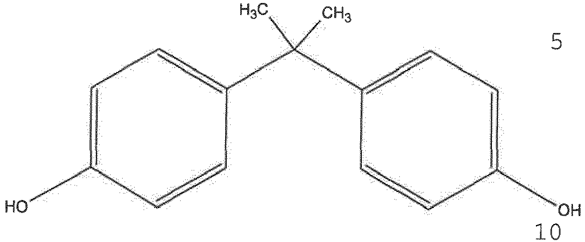

Im Sinne der vorliegenden Erfindung beinhaltet und/oder umfasst der Term "Festharz", "Flüssigharz" sowie "Festharzsystem" ein Epoxidharz aufgebaut auf den Ausgangskomponenten umfassend Epichlorhydrin (oder andere geeignete Epoxidausgangskomponenten) und Bisphenolen.

Im Sinne der vorliegenden Erfindung beinhaltet und/oder umfasst der Term "Schaltungsanlagen" insbesondere Anlagen für die Nieder, Mittel- u. Hochspannung.

Im Sinne der vorliegenden Erfindung bedeutet und/oder umfasst der Term "aufgebaut auf den Ausgangskomponente(n)" insbesondere, dass das Festharzsystem aus dieser/diesen Komponente(n) hergestellt wird.

Gemäß einer bevorzugten Ausführungsform der vorliegenden Verbindung hat das Festharzsystem vor der Härtung eine Epoxidzahl (DIN ISO 16945) von ≥0.2 bis ≤0.55, bevorzugt ≥0.35 bis ≤0.50, noch bevorzugt ≥0.4 bis ≤0.45. Dies hat sich in der Praxis als günstig erwiesen.

Erfindungsgemäß beträgt der Anteil des Flüssigharzes auf Basis von Bisphenol F im Festharzsystem (gemessen in Gew./Gewicht des Gesamtharzes) von ≥5% bis ≤60%, bevorzugt ≥10% bis ≤50%.

Erfindungsgemäß hat das Flüssigharz auf Basis von Bisphenol F eine Epoxidzahl (DIN ISO 16945) von ≥0.4 bis ≤0.63, bevorzugt ≥0.45 bis ≤0.6, noch bevorzugt ≥0.5 bis ≤0.59. Dies hat sich in der Praxis als günstig erwiesen.

Bevorzugt wird das Bisphenol-F-Flüssigharz mit Festharz auf der Basis von Bisphenol-A gemischt (wobei ggf. aufgeschmolzen oder gemäß anderer geeigneter Methoden für eine Durchmischung gesorgt wird), bevor eine Härtung erfolgt.

Gemäß einer bevorzugten Ausführungsform der vorliegenden Verbindung hat das Festharz auf Basis von Bisphenol-A eine Epoxidzahl (DIN ISO 16945) von ≥0.2 bis ≤0.3, bevorzugt ≥0.22 bis ≤0.28, noch bevorzugt ≥0.24 bis ≤0.26. Dies hat sich in der Praxis als günstig erwiesen.

Gemäß einer bevorzugten Ausführungsform der vorliegenden Erfindung umfassen die Ausgangsstoffe, aus denen das Festharz system aufgebaut ist, eine Härterkomponente.

Bevorzugt ist dabei die Härterkomponente aus der Gruppe umfassend Phthalsäureanhydrid, Tetrahydrophthalsäureanhydrid, Methylnadicanhydrid, hydriertes Methylnadicanhydrid Methylhexahydrophthalsäureanhydrid, Hexahydrophthalsäureanhydrid, Methyltetrahydrophthalsäureanhydrid sowie deren Derivate und Mischungen daraus ausgewählt. Insbesondere bevorzugt sind Mischungen aus Phthalsäureanhydrid und Tetrahydrophthalsäureanhydrid.

Gemäß einer bevorzugten Ausführungsform der vorliegenden Erfindung umfassen die Ausgangsstoffe, aus denen das Festharzsystem aufgebaut ist, eine Beschleunigerkomponente.

Bevorzugt ist dabei die Beschleunigerkomponente aus der Gruppe umfassend tertiäre Amine, quartäre Ammoniumverbindungen, Phosphine, Phosphoniumverbindungen, BCl₃ - Aminkomplexe, Imidazole sowie deren Derivate und Mischungen daraus ausgewählt

Gemäß einer noch bevorzugten Ausführungsform der vorliegenden Erfindung ist die Beschleunigerkomponente ausgewählt aus der Gruppe enthaltend 1-Methylimidazol, 1-Ethylimidazol, 1-Propylimidazol, 1-Isopropylimidazol, 1,2 Dimethylimidazol,2-Ethyl-4-Ethylimidazol, Imidazol, 1-Benzyl-2-Phenylimidazol, 1-Vinylimidazol, 2-Methylimidazol, 2-Heptadecylimidazol sowie Mischungen daraus.

Gemäß einer bevorzugten Ausführungsform der vorliegenden Erfindung umfassen die Ausgangsstoffe, aus denen das Festharzsystem aufgebaut ist, einen Füllstoff.

Bevorzugt ist dabei der Füllstoff aus der Gruppe umfassend SiO₂, Dolomit, Al₂O₃, CaCO₃, TiO₂ sowie Derivate und Mischungen davon ausgewählt.

Besonders bevorzugt ist Al₂O₃, dabei insbesondere Al₂O₃ mit einem d₅₀ von ≥2µm bis ≤6µm. Dies hat sich in der Praxis bewährt, da so die Berstfestigkeit oftmals noch erhöht werden kann. Noch bevorzugt sind ≥2,5µm bis ≤5µm, noch bevorzugt ≥3µm bis ≤3,5µm.

Gemäß einer bevorzugten Ausführungsform der vorliegenden Erfindung beträgt der Anteil des Füllstoffes im Festharzsystem (in Gew/Gew der Gesamtmischung) von ≥50% bis ≤75%. Bevorzugt sind ≥60% bis ≤70%, noch bevorzugt ≥65% bis ≤68%.

Gemäß einer bevorzugten Ausführungsform der vorliegenden Erfindung wird das Festharzsystem in einem Härtungsverfahren umfassend einen Härtungsschritt bei ≥140°C, bevorzugt ≥150°C und einer Härtungsdauer von ≥12 h, bevorzugt ≥14 h sowie am meisten bevorzugt ≥16 h hergestellt.

Gemäß einer bevorzugten Ausführungsform der vorliegenden Erfindung wird das Festharzsystem nach einer Methode hergestellt umfassend die Schritte:
a) Vorlegen eines Festharzes auf Bisphenol-A-Basis
b) Mischen dieses Festharzes mit einem Flüssigharz auf Bisphenol-F-Basis ggf. unter Erwärmen oder anderen geeigneten Methoden
c) Aushärten der Festharz-Flüssigharz-Mischung, ggf. unter Zugabe mindestens einer Härterkomponente, einer Beschleunigerkomponente und/oder eines Füllstoffs, unter mindestens einem Härtungsschritt bei ≥140°C, bevorzugt ≥150°C und einer Härtungsdauer von ≥12 h, bevorzugt ≥14 h sowie am meisten bevorzugt ≥16 h

Der Verguss erfolgt bevorzugt im Vakuum.

Die vorliegende Erfindung bezieht sich außerdem auf ein Isolierteil enthaltend ein Isolierharz gemäß der vorliegenden Erfindung. Bevorzugt ist das Isolierteil Teil einer GIS-Anlage.

Die vorliegende Erfindung bezieht sich außerdem auf die Verwendung eines Festharz, umfassend ein Festharz auf der Basis von Bisphenol A sowie ein Flüssigharz auf Basis von Bisphenol F als Ausgangsmaterial als Isoliersystem für Schaltanlagen.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Beispiele.

### BEISPIEL I

Die vorliegende Erfindung wird - rein illustrativ und nicht beschränkend - anhand des vorliegenden erfindungsgemäßen Beispiels I untersucht.

Dabei wurde zunächst eine Mischung aus Bisphenol-A-Festharz und Bisphenol-F-Flüssigharz hergestellt, indem Bisphenol-A-Festharz mit einer Epoxidzahl von 0.26 mit Bisphenol-F-Flüssigharz mit einer Epoxidzahl von 0.58 so gemischt wurden, bis sich ein Harz mit einer Epoxidzahl von 0.42 ergab.

Anschließend wurde dieses Harz mit weiteren Komponenten gemäß folgender Aufstellung gemischt und gehärtet:

| Komponente | rel. Gewichtsanteil |
|---|---|
| Harz | 100 |
| Tetrahydrophthalsäureanhydrid | 44 |
| Phthalsäureanhydrid | 22 |
| Aluminiumoxid (d₅₀: 3,3 µm) | 352 |
| 2-Methylimidazol | 0,015 |

Das entstandene Festharzsystem wurde 3h bei 130°C, danach abschließend 16 h bei 150°C gehärtet.

Weiterhin wurden ein Vergleichsharzsystem (nicht erfindungsgemäße) hergestellt.

### Vergleichsbeispiel I:

Im Vergleichsbeispiel I wurde das Bisphenol F-Flüssigharz durch Bisphenol A-Flüssigharz ersetzt. Die Herstellungsbedingungen waren ansonsten gleich.

Mit den jeweiligen Harzmischungen wurden Probestäbe u. Isolatoren gegossen. In einem Test wurden zum einen die Zugfestigkeit [ISO 527-4], die Martenstemperatur sowie der Berstwert nach Temperaturzyklen(Abdrücken mit Wasser) ermittelt

| Harzsystem | Zugfestigkeit | Martens (°C) | Berstwert |
|---|---|---|---|
| Vergleichsbeispiel I | 70 N/mm² | 143 | Sollwert nicht gehalten |
| Beispiel I | 90 N/mm² | 133 | Sollwert gehalten |

Man sieht somit die vorteilhaften Eigenschaften des erfindungsgemäßen Festharzsystems.

## Patentansprüche

1. Festharzsystem für Isolierstoffe in Schaltanlagen umfassend ein Epoxid-Festharz auf Basis von Bisphenol A und ein Flüssigharz auf Basis von Bisphenol F, wobei der Anteil des Bisphenol F-Flüssigharzes im Harz, gemessen in Gew./Gewicht des Gesamtharzes, von ≥5% bis ≤60% beträgt, und wobei das Bisphenol-F-Flüssigharz eine Epoxidzahl (DIN ISO 16945) von ≥0.4 bis ≤0.63 aufweist.

2. Festharzsystem nach Anspruch 1, wobei die Ausgangsstoffe, aus denen das Festharz aufgebaut ist, eine Beschleunigerkomponente umfassen, ausgewählt aus der Gruppe umfassend tertiäre Amine, quartäre Ammoniumverbindungen, Phosphine, Phosphoniumverbindungen, BCl₃ - Aminkomplexe, Imidazole sowie deren Derivate und Mischungen daraus.

3. Festharzsystem nach einem der Ansprüche 1 oder 2, wobei die Beschleunigerkomponente ausgewählt ist aus der Gruppe enthaltend 1-Methylimidazol, 1-Ethylimidazol, 1-Propylimidazol, 1-Isopropylimidazol Imidazol, 2-Methylimidazol, 1,2-Dimethylimidazol,2-Ethyl-4-Ethylimidazol, Imidazol,1-Benzyl-2-Phenylimidazol, 1-Vinylimidazol, 2-Methylimidazol, 2-Heptadecylimidazol, 2-Phenylimidazol sowie Mischungen daraus.

4. Festharzsystem nach einem der Ansprüche 1 bis 3, wobei die Ausgangsstoffe, aus denen das Festharz aufgebaut ist, eine Beschleunigerkomponente umfassen, ausgewählt aus der Gruppe umfassend Phthalsäureanhydrid, Tetrahydrophthalsäureanhydrid, Methylnadicanhydrid, hydriertes Methylnadicanhydrid Methylhexahydrophthalsäureanhydrid, Hexahydrophthalsäureanhydrid, Methyltetrahydrophthalsäureanhydrid sowie deren Derivate und Mischungen daraus

5. Festharzsystem nach einem der Ansprüche 1 bis 4, wobei die Ausgangsstoffe, aus denen das Festharz aufgebaut ist, einen Füllstoff umfassen, ausgewählt aus der Gruppe umfassend SiO₂, Dolomit, Al₂O₃, CaCO₃, TiO₂ sowie Derivate und Mischungen davon.

6. Festharzsystem nach einem der Ansprüche 1 bis 5, wobei die Ausgangsstoffe, aus denen das Festharz aufgebaut ist, Al₂O₃ mit einem d₅₀ von ≥2µm bis ≤6µm umfassen.

7. Verwendung eines Festharzsystems aufgebaut auf den Ausgangskomponenten enthaltend ein Festharz auf der Basis von Bisphenol A sowie ein Flüssigharz auf der Basis von Bisphenol F als Isolierstoff in elektrischen Schaltanlagen.

## Claims

1. Solid resin system for insulating compositions in switchgear, comprising a solid epoxy resin based on bisphenol A and a liquid resin based on bisphenol F, wherein the proportion of the bisphenol F liquid resin in the resin, measured in weight/weight of the overall resin, is from ≥ 5% to ≤ 60%,and wherein the bisphenol F liquid resin has an epoxide number (DIN ISO 16945) of ≥ 0.4 to ≤ 0.63.

2. Solid resin system according to Claim 1, wherein the starting materials from which the solid resin is formed comprise an accelerator component selected from the group comprising tertiary amines, quaternary ammonium compounds, phosphines, phosphonium compounds, BCl₃-amine complexes, imidazoles, and the derivatives and mixtures thereof.

3. Solid resin system according to either of Claims 1 and 2, wherein the accelerator component is selected from the group consisting of 1-methylimidazole, 1-ethylimidazole, 1-propylimidazole, 1-isopropylimidazole, 1,2-dimethylimidazole, 2-ethyl-4-ethylimidazole, imidazole, 1-benzyl-2-phenylimidazole, 1-vinylimidazole, 2-methylimidazole, 2-heptadecylimidazole, 2-phenylimidazole and mixtures thereof.

4. Solid resin system according to any of Claims 1 to 3, wherein the starting materials from which the solid resin is formed comprise an accelerator component selected from the group comprising phthalic anhydride, tetrahydrophthalic anhydride, methylnadic anhydride, hydrogenated methylnadic anhydride, methylhexahydrophthalic anhydride, hexahydrophthalic anhydride, methyltetrahydrophthalic anhydride, and the derivatives and mixtures thereof.

5. Solid resin system according to any of Claims 1 to 4, wherein the starting materials from which the solid resin is formed include a filler selected from the group comprising SiO₂, dolomite, Al₂O₃, CaCo₃, TiO₂ and derivatives and mixtures thereof.

6. Solid resin system according to any of Claims 1 to 5, wherein the starting materials from which the solid resin is formed include Al₂O₃ with a d₅₀ of ≥ 2 µm to ≥ 6 µm.

7. Use of a solid resin system formed from the starting components comprising a solid resin based on bisphenol A and a liquid resin based on bisphenol F as an insulating composition in electrical switchgear.

## Revendications

1. Système de résine solide pour des matières isolantes d'installation de distribution, comprenant une résine solide d'époxyde à base de bisphénol A et une résine liquide à base de bisphénol F, la proportion de la résine liquide de bisphénol F dans la résine, mesurée en pourcentage en poids de la résine totale, va de ≥5% à ≤60% et la résine liquide de bisphénol F a un indice d'époxyde (DIN ISO 16945) allant de ≥0,4 à ≤0,63.

2. Système de résine solide suivant la revendication 1, dans lequel les matières de départ, à partir desquelles la résine solide est constituée, comprennent un accélérateur choisi dans le groupe comprenant des amines tertiaires, des composés d'ammonium quaternaire, des phosphines, des composés de phosphonium, des complexes BCl₃ - aminés, des imidazoles, ainsi que leurs mélanges et dérivés.

3. Système de résine solide suivant l'une des revendications 1 ou 2, dans lequel l'accélérateur est choisi dans le groupe comportant le 1-méthylimidazol, le 1-éthylimdazol, le 1-propylimidazol, le 1-isopropylimazol, l'imidazol, le 2-méthylimidazol, le 1,2-diméthylimidazol, le 2-éthyl-4-éthylimidazol, l'imidazol, le 1-benzyl-2-phénylimidazol, le 1-vinylimidazol, le 2-méthylimidazol, le 2-heptadécylimidazol, le 2-phénylimidazol, ainsi que leurs mélanges.

4. Système de résine solide suivant l'une des revendications 1 à 3, dans lequel les substances de départ à partir desquelles la résine solide est constituée comprennent un accélérateur choisi dans le groupe comprenant l'anhydride phtalique, l'anhydride tétrahydrophtalique, l'anhydride méthylnadicanique, l'anhydride méthylnadicanique hydraté, l'anhydride méthyhexahydrophtalique, l'anhydride hexahydrophtalique, l'anhydride méthyltétrahydrophtalique, ainsi que leurs mélanges et dérivés.

5. Système de résine solide suivant l'une des revendications 1 à 4, dans lequel les substances de départ à partir desquelles la résine solide est constituée comprennent une charge choisie dans le groupe comprenant SiO₂, la dolomite, Al₂O₃, CaCO₃, TiO₂, ainsi que leurs mélanges et dérivés.

6. Système de résine solide suivant l'une des revendications 1 à 5, dans lequel les substances de départ à partir desquelles la résine solide est constituée comprennent Al₂O₃, ayant un d₅₀ allant de ≥2µm à ≤6µm.

7. Utilisation d'un système de résine solide constitué à partir des constituants de départ contenant une résine solide à base de bisphénol A, ainsi qu'une résine liquide à base de bisphénol F, comme matière isolante dans des installations de distribution électrique.
